# EUROPEAN PATENT SPECIFICATION

(11) **EP 3 273 264 B1**
(45) Date of publication and mention of the grant of the patent: **15.05.2024**
(21) Application number: 17181530.1
(22) Date of filing: 14.07.2017
(51) Int. Cl.: G01S 7/52, G01S 7/521, G01S 15/02, G01S 15/86, G01S 15/89, B06B 1/06

(54) **UNDERWATER DETECTION APPARATUS**
UNTERWASSERDETEKTIONSVORRICHTUNG
APPAREIL DE DÉTECTION SOUS-MARINE

(30) Priority: 20.07.2016 JP 2016142004
(43) Date of publication of application: 24.01.2018
(73) Proprietor: Furuno Electric Company Limited, Hyogo 662-8580 (JP)
(72) Inventor: NISHIMORI, Yasushi, Nishinomiya-City, Hyogo 662-8580 (JP)
(74) Representative: CSY London

(56) References cited:
- EP-A2- 1 085 497
- JP-A- H1 164 492
- JP-A- 2010 145 249
- US-A1- 2002 023 497
- US-A1- 2004 049 110
- US-A1- 2013 301 394
- US-B1- 6 778 468

## Description

This disclosure relates to an underwater detection apparatus.

JPS63198888(A), JPH1164492(A), and JPH1062396(A) disclose various underwater detection apparatuses.

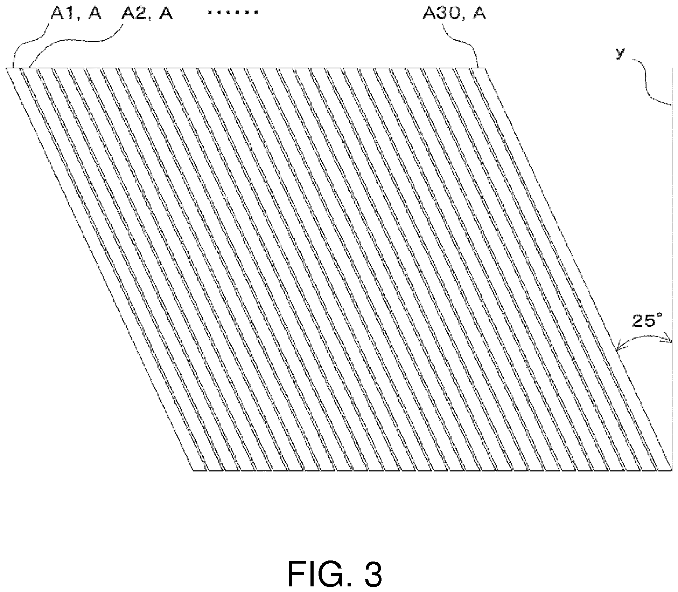

For example, JPS63198888(A) particularly discloses a depth sounding apparatus as the underwater detection apparatus, which is of a cross fan beam type (mills cross type). With reference to Fig.3, this underwater detection apparatus includes an array of transmission transducers 15 having elements arranged in a fore-aft direction of a ship on which the underwater detection apparatus is installed, and an array of reception transducers 21 having elements arranged in a port-starboard direction of the ship. The underwater detection apparatus is capable of measuring a depth of a sounding area A3 where a transmission beam A1 and a reception beam A2 cross each other.

JPH1164492(A) discloses a cylindrical ultrasonic oscillator including stick-shaped ultrasonic oscillator elements arranged in parallel to each other on its circumference so that each ultrasonic oscillator extends obliquely in the circumferential direction.

JPH1062396(A) discloses an ultrasonic oscillator array using a one-dimensional array structure in which ultrasonic oscillator elements are arranged in line, and an ultrasonic diagnostic apparatus using the ultrasonic oscillator array.

In JPS63198888(A), when the ship moves in a pitch direction, a transmission direction of a transmission wave transmitted from each element of the transmission transducer is correctable based on this movement by adjusting the phase of the transmission wave. However, there is no description whatsoever about correcting the transmission wave when the ship moves in other directions, e.g., a roll direction or a yaw direction. Thus, the underwater detection apparatus described in JPS63198888(A) cannot accurately correct the
transmission direction of the transmission wave depending on the moving direction of the ship.

Although in this regard, the transmission direction of the transmission wave becomes correctable regardless of the moving direction of the ship by using, for example, a transmission transducer including transmission elements arranged two-dimensionally, a large number of transmission elements are required to achieve this two-dimensional arrangement.

US 2002/0023497 discloses a cylindrical transducer constructed of a plurality of ultrasonic transducer arrays arranged in a circular form. The ultrasonic transducer arrays are divided into groups, and tilt angles of transmitting and receiving beams are controlled to compensate for swing motions of the cylindrical transducer depending on which group the individual ultrasonic transducer arrays belong to.

US 6,778,468 discloses a scanning sonar which solves a false image problem caused by grating lobes and side lobes by emitting ultrasonic waves in directionally varying frequency bands and by receiving echo signals from specified angular directions while selecting the frequency from one direction to another. The sonar uses a cylinder-shaped transducer and the transducer is mounted on the bottom of the vessel in such a manner that the central axis of the transducer is positioned vertically.

JP 2010 145249 discloses an ultrasonic measuring device for measuring a sea bottom shape. The device comprises a transmitter for transmitting an ultrasonic wave having a different frequency in the azimuth direction, a receiver for receiving a reflected wave from an object of the ultrasonic wave transmitted from the transmitter, and a processing means for processing information of the reflected wave from the object as three-dimensional measurement results.

The purpose of the present disclosure relates to providing at low cost an underwater detection apparatus, which stabilizes a transmission direction of a transmission wave.

According to the present invention there is provided an underwater detection apparatus as defined in claim 1.

Preferred features of the invention are recited in the dependent claims.
(2) The transmission circuit may make the transmission transducer transmit the transmission wave in the given direction by driving each transmission element with a transmission signal and by controlling at least one of a phase and an amplitude of each transmission signal.
(3) The attitude information may include a roll information of the vessel. The transmission circuit may control the amplitude of each transmission signal based on the roll information.
(4) The attitude information may include a pitch information of the vessel. The transmission circuit may control the phase of each transmission signal based on the pitch information.
(5) The attitude information may include a yaw information of the vessel. The transmission circuit may control the phase of each transmission signal based on the yaw information.
(6) When the vessel is side slipping, the transmission circuit may control the phase of each transmission signal to control a tilt angle of the transmission wave.
(7) The transmission circuit may control the tilt angle depending on a transmission direction of the transmission wave.
(8) The plurality of transmission elements are arranged on a curved surface.
(9) The curved surface is bulging downward and comprises at least a part of a side of a cylinder. The central axis of the cylinder is configured to extend in the fore-aft direction of the vessel.
(10) The transmission transducer may further include an acoustic lens covering a transmitting surface of the plurality of transmission elements.
(11) Each transmission element may have an elongated wave transmitting surface.
(12) The plurality of transmission elements may be arranged in a port-starboard direction of the vessel.
(13) The underwater detection apparatus may further include an image generator that may generate an image based on the reception signal.
(14) The transmission transducer may transmit at different timing a first transmission wave and a second transmission wave as the transmission wave, the first and second transmission waves having different frequencies. The transmission circuit may make the first and second transmission waves be transmitted in the given direction relative to the water surface. The reception circuit may obtain a first reception signal and a second reception signal as the reception signal, the first reception signal being based on a reflection wave of the first transmission wave and the second reception signal being based on a reflection wave of the second transmission wave. The image generator may generate the image based on the first reception signal and the second reception signal.

According to the present disclosure, an underwater detection apparatus which stabilizes a transmission direction of a transmission wave may be provided at low cost.

The present disclosure is illustrated by way of example and not by way of limitation in the figures of the accompanying drawings, in which the like reference numerals indicate like elements and in which:
Fig. 1 is a block diagram illustrating a configuration of a sonar according to one embodiment;
Fig. 2 is a perspective view schematically illustrating a structure of a transmission transducer of the sonar of this embodiment;
Fig. 3 is a developed view of a plurality of transmission elements provided to the transmission transducer illustrated in Fig. 2;
Figs. 4A and 4B are views schematically illustrating one example of a state where the transmission transducer illustrated in Fig. 2 is fixed to the bottom of a ship, in which Fig. 4A is a side view of the ship and Fig. 4B is a rear view of the ship;
Fig. 5 is a schematic view of a region of sound field formable in the sea by the transmission transducer;
Fig. 6 is a view schematically illustrating the structure of the reception transducer seen from a wave receiving surface side;
Figs. 7A and 7B are views schematically illustrating the transmission transducer attached to the ship, in which Fig. 7A is a front view of the transmission transducer and Fig. 7B is a bottom view of the transmission transducer;
Fig. 8 is a view illustrating single-element sound field regions where the respective transmission elements of the transmission transducer illustrated in Figs. 7A and 7B may form a sound field;
Fig. 9 is a simulation result of an intensity distribution of the transmission waves when a phase control is executed so that a tilt angle of each transmission wave becomes 0°;
Fig. 10 is a schematic right view of the transmission transducer attached to the ship;
Fig. 11 is a simulation result of an intensity distribution of the transmission waves when a phase control is executed so that the tilt angle of each transmission wave becomes +10°;
Fig. 12 is a simulation result of an intensity distribution of the transmission waves when the phase control is executed so that the tilt angle of each transmission wave becomes +20°;
Fig. 13 is a schematic left view of the transmission transducer attached to the ship;
Figs. 14A to 14C are schematic rear views of the ship when traveling, and illustrating a roll correction, in which Fig. 14A is a view illustrating the ship before moving in the roll direction and a transmission beam, Fig. 14B is a view illustrating the ship moving in the roll direction and the transmission beam, and Fig. 14C is a view illustrating the transmission beam after the roll correction, together with the ship;
Figs. 15A to 15C are schematic side views of the ship when traveling, and illustrating a pitch correction, in which Fig. 15A is a view illustrating the ship before moving in the pitch direction and the transmission beam, Fig. 15B is a view illustrating the ship moving in the pitch direction and the transmission beam, and Fig. 15C is a view illustrating the transmission beam after the pitch correction, together with the ship;
Figs. 16A to 16C are schematic top views of the ship when traveling, and illustrating a yaw correction, in which Fig. 16A is a view illustrating the ship before moving in the yaw direction and the transmission beam, Fig. 16B is a view illustrating the ship moving in the yaw direction and the transmission beam, and Fig. 16C is a view illustrating the transmission beam after the yaw correction, together with the ship;
Fig. 17 is a simulation result of an intensity distribution of the transmission waves when the tilt angle of the transmission wave is changed depending on an azimuth angle;
Fig. 18 is a schematic top view of the ship traveling while side slipping;
Fig. 19 is a plan view of a transmission transducer provided to a sonar according to a modification not falling under the scope of the claimed inventions;
Fig. 20 is a cross-sectional view taken along the line XX-XX of Fig. 19, in which the transmission directions of the single-element transmission waves in a state where the transmission transducer illustrated in Fig. 19 is exposed to the sea are indicated by arrows; and
Fig. 21 is a block diagram illustrating a configuration of a sonar of another modification.

Hereinafter, one embodiment of a sonar 1 as an underwater detection apparatus of this disclosure is described with reference to the appended drawings. In the following embodiment, an example is illustrated in which this disclosure is applied to a ship. However, the present disclosure may be applied to any kinds of vehicles having a rudder or a similar steering device, such as other watercrafts including boats, vessels, and submarines. The sonar 1 of this embodiment may be a so-called cross fan beam type sonar, and may be attached to the bottom of a ship and measure the undulation of the seabed in a given area below the ship.

### [Overall Structure]

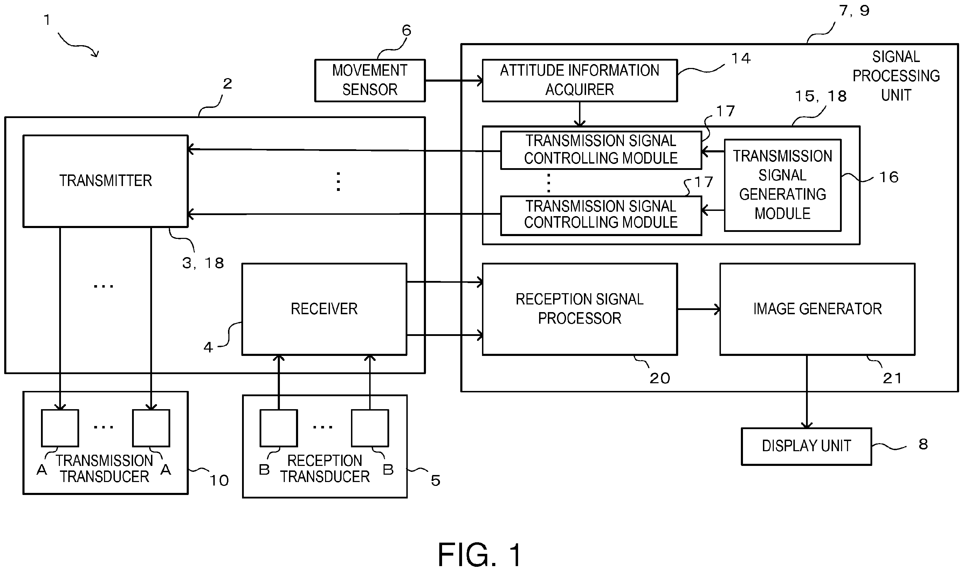

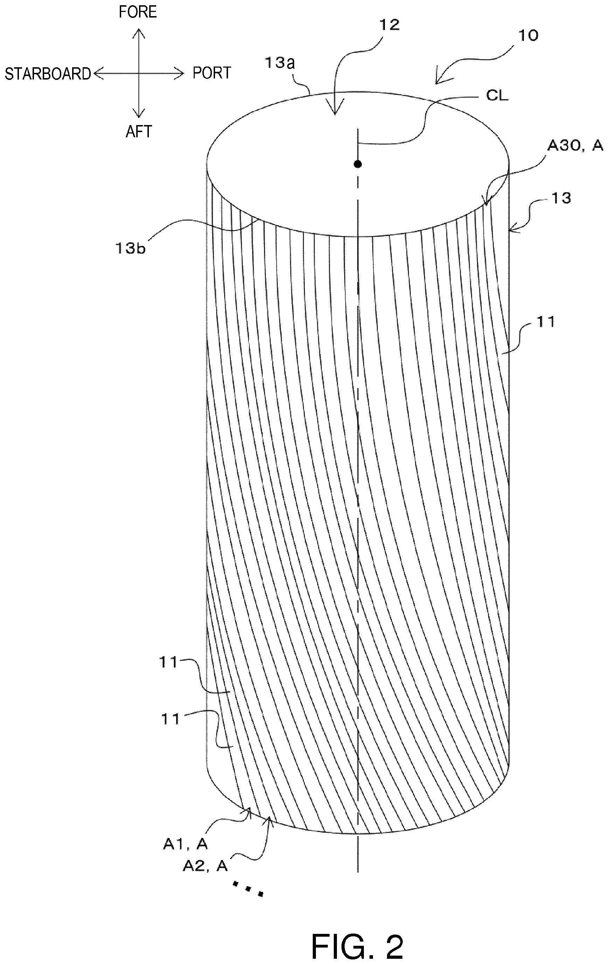

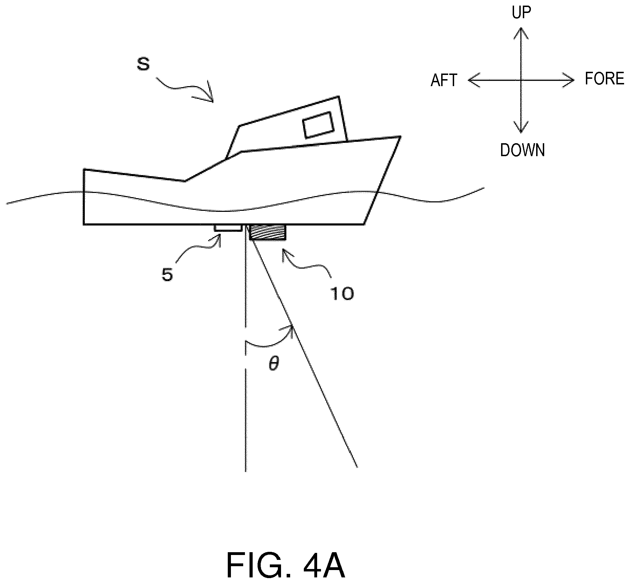

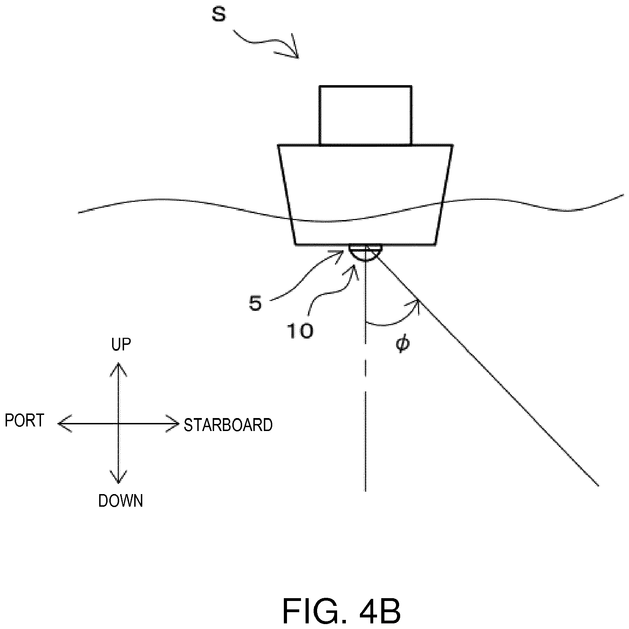

Fig. 1 is a block diagram illustrating a configuration of the sonar 1 of this embodiment. Fig. 2 is a perspective view schematically illustrating a structure of a transmission transducer 10 of the sonar 1 of this embodiment. Fig. 3 is a developed view of a plurality of transmission elements A provided to the transmission transducer 10 illustrated in Fig. 2. Figs. 4A and 4B are views schematically illustrating one example of a state where the transmission transducer 10 illustrated in Fig. 2 and a reception transducer 5 are fixed to the bottom of the ship S, in which Fig. 4A is a side view of the ship S and Fig. 4B is a rear view of the ship S.

With reference to Fig. 1, the sonar 1 of this embodiment includes a transmission and reception device 2 having a transmitter 3 and a receiver 4 (which may also be referred to as a reception circuit), the transmission transducer 10, the reception transducer 5, a movement sensor 6, a signal processing unit 7, and a display unit 8.

The transmitter 3 may be comprised of, for example, an analog circuit. The transmitter 3 may amplify a transmission signal generated by a transmission controller 15 of the signal processing unit 7 as a basis of a transmission wave transmitted from each transmission element A of the transmission transducer 10. The transmitter 3 may output the amplified transmission signal to the transmission transducer 10. Hereinafter, the transmission wave transmitted from each transmission element A may be referred to as the single-element transmission wave. Note that the transmitter 3 and the transmission controller 15 may constitute a transmission circuit 18.

### [Configuration of Transmission Transducer]

The transmission transducer 10 may transmit the transmission wave based on the transmission signal outputted from the transmitter 3. The transmission transducer 10 may have the plurality of transmission elements A each of which is constituted by an ultrasonic transducer. Each transmission element A may transmit the transmission wave in a given frequency band at a given time interval.

With reference to Fig. 2, each transmission element A may have an elongated wave transmitting surface 11 which may transmit the transmission wave. The transmission element A may be provided along an outer circumferential surface 13 (which may also be referred to as a transmission element fixed surface) of a cylindrical casing 12 of the transmission transducer 10. For example, the transmission elements A may be made from a flexible composite material and fixed to the outer circumferential surface 13 of the cylindrical casing 12 by being wound around it so that a longitudinal direction of each transmission element A is oblique (i.e., neither parallel nor at right angle) to a central axis CL of the cylindrical casing 12.

The following is an example of a manufacturing method of the transmission transducer 10. That is, the method of manufacturing the transmission transducer 10 may include preparing the plurality of transmission elements A each having the elastic transmitting surface 11, arranging the plurality of transmission elements A in the circumferential direction of the transmission element fixed surface (outer circumferential surface 13) of the casing (cylindrical casing 12) so that the longitudinal direction of each transmission element A becomes oblique to the central axis CL of the casing, and fixing the transmission element A to the transmission element fixed surface by bringing into close contact therewith. The transmission element fixed surface may be formed in at least a part of a side of the cylinder.

By using the manufacturing method, it may become unnecessary to form the reception transducer as follows. For example, it may become unnecessary to form the transmission element by forming a ceramic material into a complex three-dimensional shape along the outer circumferential surface 13 of the cylindrical casing 12 and sintering it. Thus, according to this manufacturing method, the transmission transducer 10 may be manufactured relatively easily.

The transmission transducer 10 may have such a structure in which the plurality of transmission elements A arranged as illustrated in Fig. 3 are wound around the cylindrical casing 12. The angle of each transmission element A with respect to an axis y in Fig. 3 may be, but not limited to, 25°, for example. The axis y may correspond to the fore-aft direction of the ship S in a state where the transmission transducer 10 is fixed to the ship S.

In this embodiment, in the example illustrated in Fig. 3, each transmission element A of the plurality of transmission elements is illustrated as a straight element; however without limiting to this, each transmission element A may be for example a curved or a sinuous element. In this embodiment, the example in which the transmission transducer 10 may have thirty transmission elements A is given; however, without limiting to this, the number may be different. In the following description, when describing the transmission elements without distinguishing the individual, A may be used as a reference character indicating the transmission element, whereas, when describing the transmission elements by distinguishing the individual, A1, A2, ..., A30 may be used as reference characters indicating the transmission elements. In the state where the transmission transducer 10 is fixed to the ship S, among all the transmission elements, the transmission element A1 may be disposed at the most-starboard side and the transmission element A30 may be disposed at the most-port side.

With reference to Fig. 2, the outer circumferential surface 13 of the cylindrical casing 12 may be comprised of an upper outer circumferential surface 13a and a lower outer circumferential surface 13b. When the outer circumferential surface is cut with a plane surface including the central axis CL of the cylindrical casing 12, the upper outer circumferential surface 13a may be the outer circumferential surface on one side, and the lower outer circumferential surface 13b may be the outer circumferential surface on the other side. In this embodiment, each transmission element A may be provided on the lower outer circumferential surface 13b. Note that, one or more of the transmission elements A disposed on the lower outer circumferential surface 13b side may also extend to the upper outer circumferential surface 13a. Further, the upper and lower outer circumferential surfaces 13a and 13b may be defined as follows. That is, when the outer circumferential surface 13 is cut with a plane surface including a straight line parallel to the central axis CL, the outer circumferential surface on one side may be the upper outer circumferential surface 13a and the outer circumferential surface on the other side may be the lower outer circumferential surface 13b.

The transmission transducer 10 is fixed to the bottom of the ship S with reference to Fig. 4. With reference to Figs. 2, 4A and 4B, the transmission transducer 10 is fixed to the bottom of the ship S so that the central axis CL of the cylindrical casing 12 matches with a fore-aft direction of the ship S and a part of the transmission transducer 10 on the lower outer circumferential surface 13b side of the cylindrical casing 12 (i.e., the part where the transmission elements A are provided) is disposed on the lower side (seabed side). Thus, the transmission transducer 10 is configured to transmit the transmission wave into the sea.

### [Sound Field Formed by Reception Transducer]

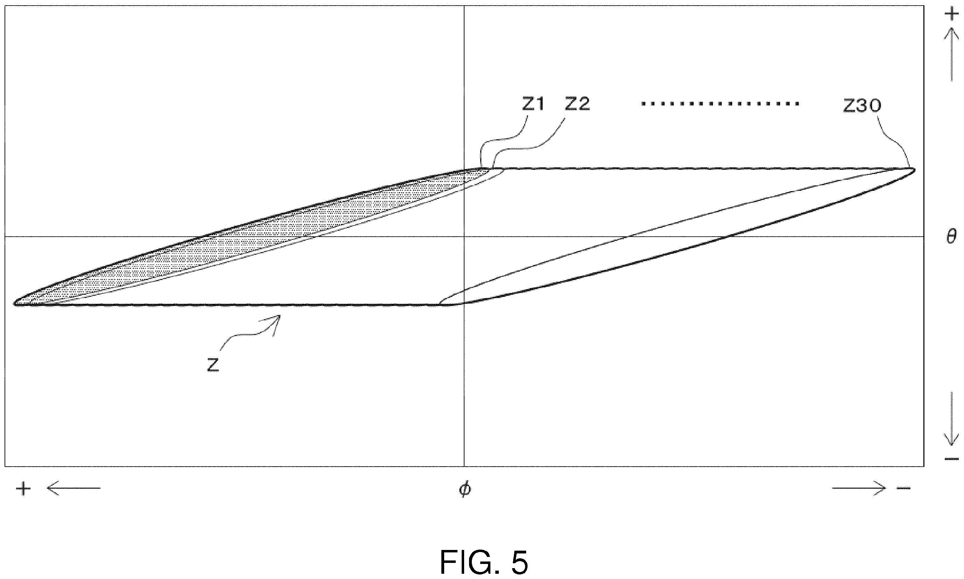

Fig. 5 is a schematic view of a region of sound field formable in the sea by the transmission transducer 10 (hereinafter, referred to as "sound field formable region Z"). In Fig. 5, the sound field formable region Z is illustrated by a bold line frame in a substantially parallelogram shape. According to the transmission transducer 10, the transmission wave may be transmitted in the area of the sound field formable region Z. The vertical direction of Fig. 5 may correspond to a tilt direction θ (see Fig. 4A), and the horizontal direction of Fig. 5 may correspond to an azimuth direction ϕ (see Fig. 4B).

The sound field formable region Z may be a sound field region formable by the single-element transmission wave (hereinafter, referred to as "single-element sound field regions Z1 to Z30). As illustrated in Fig. 5, each of the single-element sound field regions Z1 to Z30 may have an elongated elliptical shape extending in an oblique direction. Note that in Fig. 5, the regions Z3 to Z29 are not illustrated for the sake of simplicity of the drawings. In Fig. 5, the single-element sound field region Z1 is indicated by a dot hatching region. The single-element sound field region Z2 may be formed slightly on the right side of the region Z1 (the direction in which the value in the azimuth direction ϕ, i.e., azimuth angle, becomes smaller). Similarly, the single-element sound field regions Z3 to Z30 may be formed slightly on the right side of the single-element sound field regions Z2 to Z29, respectively.

In the sonar 1 of this embodiment, by suitably controlling the phase of the single-element transmission wave transmitted from each transmission element A, in a desired area of the sound field formable region Z, the single-element transmission waves may intensify each other and the intensity of the transmission wave may become higher. On the other hand, outside the desired area, the single-element transmission waves may cancel out each other and the intensity of the transmission wave may become lower. In this embodiment, by suitably controlling the phase of the single-element transmission wave, the tilt direction θ in which the transmission wave is transmitted from the reception transducer, in other words, the tilt angle of the transmission wave, may be controlled. Thus, a fan-shaped transmission beam may be formed for a desired tilt angle θ, and the transmission wave may be transmitted to the tilt angle θ. The control of the phase of the single-element transmission wave may be executed by the transmission controller 15 (described later in detail).

Further in the sonar 1, by suitably controlling the phase and amplitude of each single-element transmission wave, a so-called movement correction may be performed. The movement correction may be performed so that when the ship moves in one of the pitch, roll, and yaw directions and the transmission direction of the transmission wave deviates from a given direction, the transmission direction of the transmission wave is brought back to the given direction. This movement correction may also be performed by the transmission controller 15.

### [Configuration of Reception Transducer]

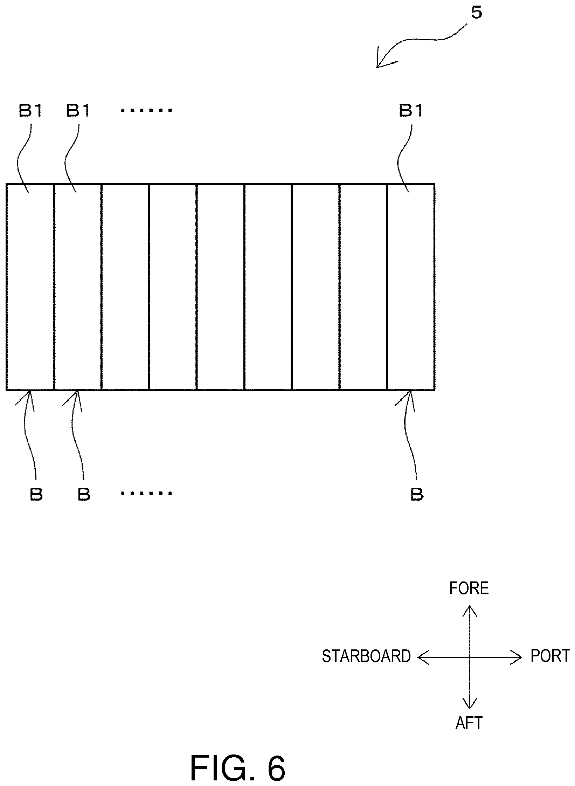

Fig. 6 is a view schematically illustrating the structure of the reception transducer 5 seen from a wave receiving surface side. The reception transducer 5 may receive a reflection wave caused by the transmission wave transmitted from the transmission transducer 10 as a reception wave. The reception transducer 5 has a plurality of reception elements B. As illustrated in Fig. 6, each reception element B may have an elongated wave receiving surface B1. In the reception transducer 5, the plurality of reception elements B may be arranged in line in a lateral direction of the reception elements B. In the reception transducer 5, in a state where the reception transducer 5 is fixed to the bottom of the ship S, a longitudinal direction of the reception elements B is parallel to the fore-aft direction of the ship S and the arranged direction of the reception elements B is parallel to the port-starboard direction of the ship S. By structuring the reception transducer 5 in this manner, a reception beam substantially orthogonal to the fan-shaped transmission beam formed by the transmission transducer 10 may be formed. For example, the reception transducer 5 may be fixed to the bottom of the ship S integrally with the transmission transducer 10 by using a housing (not illustrated) or a casing. However, without limiting to this, the transmission transducer 10 and the reception transducer 5 may be provided separately from each other, and they may respectively be fixed to the bottom of the ship S.

The receiver 4 may be comprised of, for example, an analog circuit. The receiver 4 may amplify and A/D convert the reception wave received by each reception element B of the reception transducer 5, so as to convert the reception wave into a digital reception signal. By the processing on the reception wave received by each reception element B as described above, the receiver 4 may generate the reception signal corresponding to each reception element B.

The movement sensor 6 may be fixed to the ship S on which the sonar 1 is installed. The movement sensor 6 may detect attitude information of the ship S when the ship S moves with respect to the water surface, for example, detect a pitch angle, a roll angle, and a yaw angle of the ship. The movement data detected by the movement sensor 6, for example, the pitch angle, the roll angle, and the yaw angle may be notified to the signal processing unit 7.

With reference to Fig. 1, the signal processing unit 7 may include an attitude information acquirer 14 (which may also be referred to as an attitude information receiver), the transmission controller 15, a reception signal processor 20, and an image generator 21. The signal processing unit 7 may be comprised of devices such as a hardware processor 9 (e.g., CPU, FPGA, etc.) and a nonvolatile memory. For example, by the CPU reading a program from the nonvolatile memory and executing it, the signal processing unit 7 may function as the attitude information acquirer 14, the transmission controller 15, the reception signal processor 20, and the image generator 21.

The attitude information acquirer 14 may acquire the pitch angle, the roll angle, and the yaw angle of the ship S detected by the movement sensor 6. These attitude information acquired by the attitude information acquirer 14 may be outputted to the transmission controller 15.

The transmission controller 15 may generate the transmission signal which is the basis of the transmission wave transmitted from each wave transmission element A, and output the transmission signal to the transmitter 3. The transmission controller 15 may have a transmission signal generating module 16 and transmission signal controlling modules 17. The transmission signal generating module 16 may generate the transmission signal at a given frequency.

The transmission signal controlling modules 17 may be provided corresponding to the transmission elements A, respectively. Each transmission signal controlling module 17 may perform two controls on the transmission signal: the phase control and the amplitude control. In the phase control, the phase of the transmission signal may be controlled. In the amplitude control, the amplitude of the transmission signal may be controlled. Note that, although the example in which the transmission signal controlling module 17 may perform the above two controls is described here, without limiting to this, the transmission signal controlling module 17 may execute at least one of these two controls. The transmission signal controlling module 17 may execute an aperture control instead of the amplitude control. In the aperture control, one or more of the transmission elements A from which the transmission wave is transmitted may be selected.

The transmission signal controlling module 17 may control the direction in which the transmission transducer transmits the transmission wave, by controlling the phase of the transmission signal corresponding to the transmission element A. For example, the transmission signal controlling module 17 may suitably shift the phase of the transmission signal so that the transmission wave is transmitted to the direction of a tilt angle inputted by a user via a user-interface (not illustrated). Thus, the transmission transducer may transmit the transmission wave in the given direction. For example, the transmission signal controlling module 17 may perform phase shifting on the transmission signal by suitably adjusting a delay amount of the transmission signal relative the other. Thus, the transmission controller 15 may output the phase-shifted transmission signal to the transmitter 3.

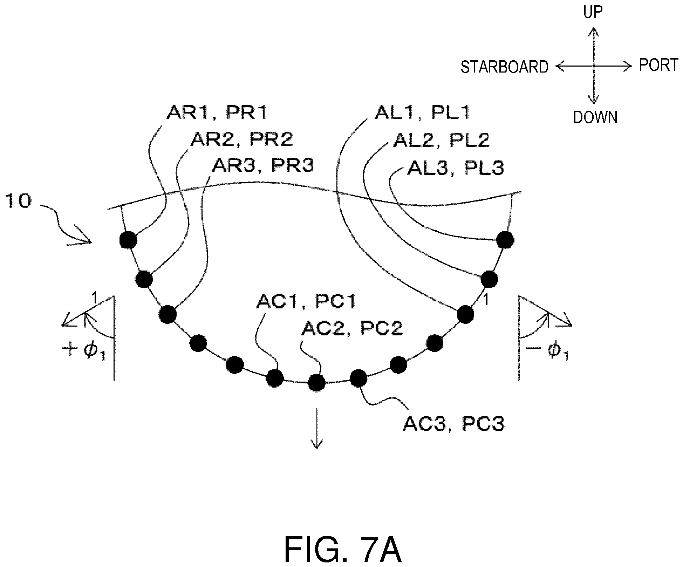

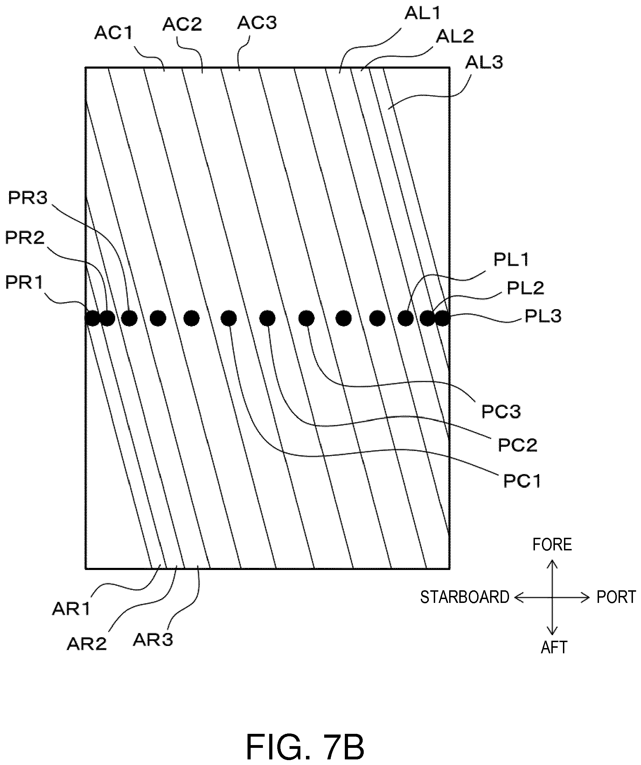

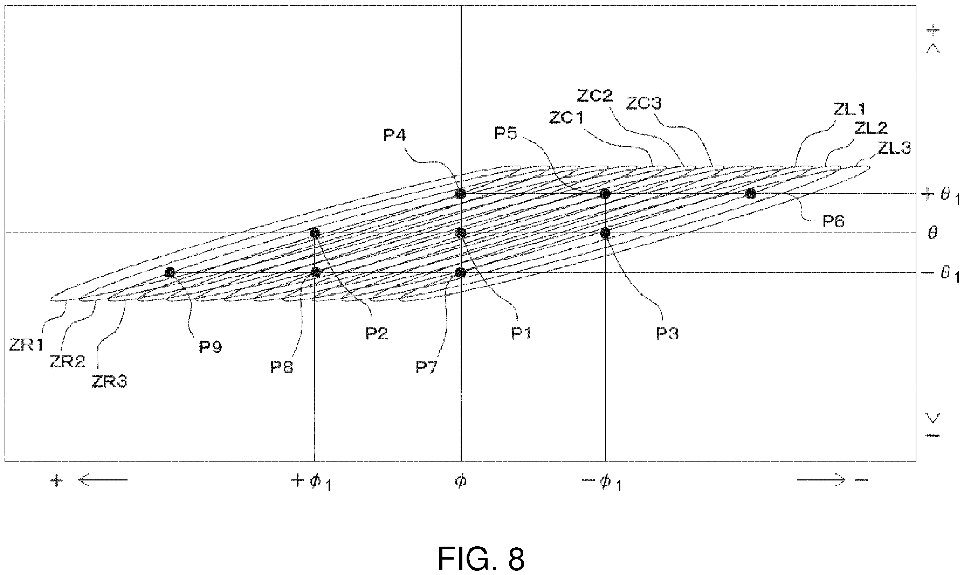

Figs. 7A and 7B are views schematically illustrating the transmission transducer 10 attached to the ship S, in which Fig. 7A is a front view of the transmission transducer 10 and Fig. 7B is a bottom view of the transmission transducer 10. Further, Fig. 8 is a view illustrating single-element sound field regions where the respective transmission elements of the transmission transducer 10 illustrated in Figs. 7A and 7B may form a sound field.

In Figs. 7A and 7B, for the sake of convenience of explanation and simplicity of the drawings, the illustrated transmission transducer has less transmission elements A than that of the transmission transducer illustrated in Fig. 2. Hereinafter, with reference to Figs. 7A and 7B, three transmission elements A on the left side may be referred to as the left elements AL1, AL2 and AL3, three transmission elements A at the center may be referred to as the center elements AC1, AC2 and AC3, and three transmission elements A on the right side may be referred to as the right elements AR1, AR2 and AR3. The dots depicted corresponding to the transmission elements may be the center points PL1, PL2, PL3, PC1, PC2 and PC3, PR1, PR2 and PR3 of the transmission elements AL1, AL2, AL3, AC1, AC2, AC3, AR1, AR2 and AR3, respectively.

### [Tilt Control of Transmission Wave]

### (A) When the tilt angle θ is 0°

In a case of transmitting the fan-shaped transmission wave in the direction in which the tilt angle θ is 0°, the transmission controller 15 may control the phases of the transmission signals generated corresponding to the transmission elements A so that the single-element transmission waves transmitted from the transmission elements A have the same phase. In this manner, a high-intensity transmission wave may be transmitted to each azimuth angle ϕ.

This control is described with reference to Fig. 7A. First, considering the center elements AC1 to AC3, the elements AC1 to AC3 may have substantially no difference in distance in the vertical direction (i.e., the direction in which the azimuth angle ϕ is 0°) from each other. Therefore, since the single-element transmission waves transmitted from the center elements AC1 to AC3 intensify each other at the azimuth angle ϕ of 0°, the high-intensity transmission wave may be transmitted at the azimuth angle ϕ of 0°. The sound field region formed by the center elements AC1 to AC3 described here may be the region near a point P1 in Fig. 8.

Next, considering the right elements AR1 to AR3, the elements AR1 to AR3 may have substantially no difference in distance in an obliquely rightward and downward direction (the +ϕ₁ direction in the example illustrated in Fig. 7A). Therefore, since the single-element transmission waves transmitted from the right elements AR1 to AR3 intensify each other at the azimuth angle of +ϕ₁°, the high-intensity transmission wave may be transmitted to the azimuth angle +ϕ₁. The sound field region formed by the right elements AR1 to AR3 described here may be the region near a point P2 in Fig. 8.

Next, considering the left elements AL1 to AL3, the elements AL1 to AL3 may have substantially no difference in distance in an obliquely leftward and downward direction (the -ϕ₁ direction in the example illustrated in Fig. 7A). Therefore, since the single-element transmission waves transmitted from the left elements AL1 to AL3 intensify each other at the azimuth angle of -ϕ₁°, the high-intensity transmission wave may be transmitted to the azimuth angle -ϕ₁. The sound field region formed by the left elements AL1 to AL3 described here may be the region near a point P3 in Fig. 8.

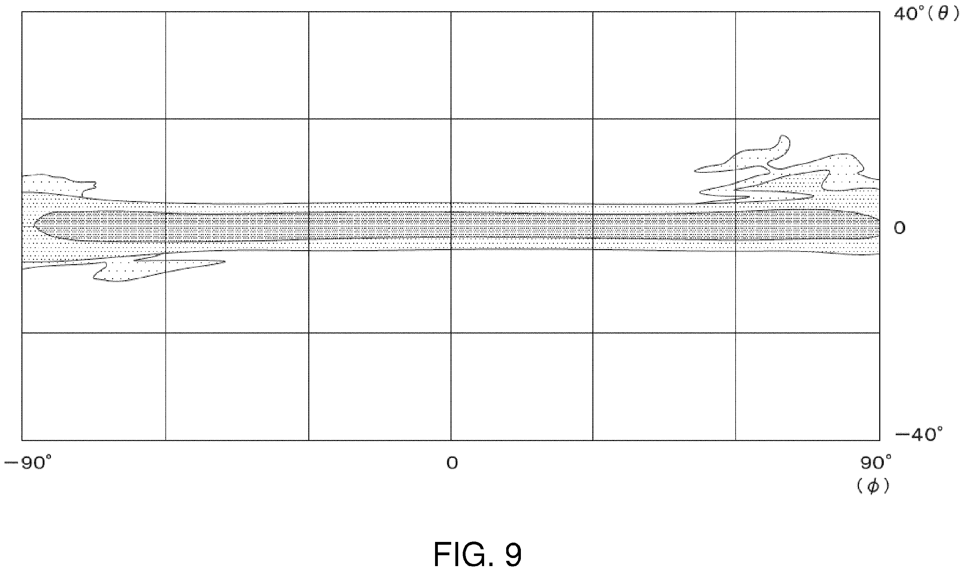

Further, after the phase control described here is performed for all the transmission elements A, the high-intensity transmission wave may be transmitted to each azimuth angle ϕ when the tilt angle is 0°. Fig. 9 is a simulation result of an intensity distribution of the transmission waves when the phase control is executed so that the tilt angle of each transmission wave becomes 0°. In Fig. 9 and Figs. 11, 12, and 17 which are described in detail below, the intensity of the transmission wave corresponds to the intensity of the dot hatching. For example, the region where the intensity of the transmission wave is strong is indicated by high-density dot hatching, the region where the intensity of the transmission wave is medium is indicated by medium-density dot hatching, the region where the intensity of the transmission wave is weak is indicated by low-density dot hatching. As illustrated in Fig. 9, according to the sonar 1, it is confirmed that a sharp transmission wave may be transmitted to the tilt angle of 0° (directly downward direction) in a relatively wide range of the azimuth angle.

### (B) When the tilt angle θ is +θ₁

In a case of transmitting the transmission wave in the direction in which the tilt angle θ is +θ₁, the transmission controller 15 may control the phases of the transmission signals generated corresponding to the transmission elements A so that the single-element transmission waves transmitted from the transmission elements A have a phase difference described next. As a result, a fan beam of which the tilt angle is +θ₁ may be transmitted to each azimuth angle ϕ with high intensity.

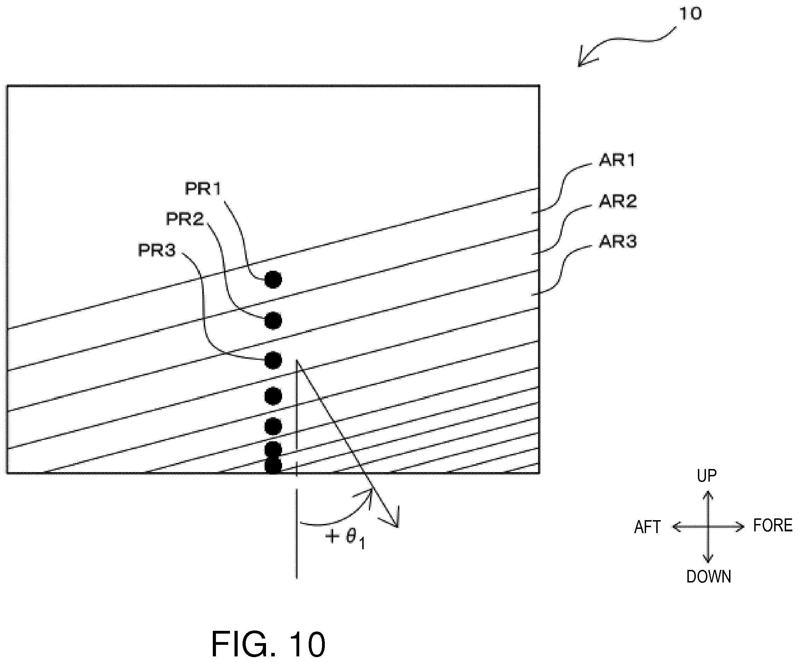

This control is described with reference to Fig. 10 which is a schematic right view of the transmission transducer 10 attached to the ship S. For example, considering the right elements AR1 to AR3, in order to have the tilt angle of the transmission waves at +θ₁, the single-element transmission waves of the right elements AR1 to AR3 may be shifted in phase so as to substantially eliminate the phase difference caused by an optical path difference of the single-element transmission waves from the right elements AR1 to AR3 in the +θ₁ direction. Therefore, the high-intensity transmission wave may be transmitted to the tilt angle of +θ₁ from the right elements AR1 to AR3. The sound field region formed by the right elements AR1 to AR3 described here may be the region near a point P4 in Fig. 8.

Also for the center elements AC1 to AC3 and the left elements AL1 to AL3, by performing similar phase shifting, the high-intensity transmission wave may be transmitted to the tilt angle of +θ₁ from the elements AC1 to AC3 and AL1 to AL3. The sound field region formed by the center elements AC1 to AC3 described here may be the region near a point P5 in Fig. 8. Further the sound field region formed by the left elements AL1 to AL3 described here may be the region near a point P6 in Fig. 8.

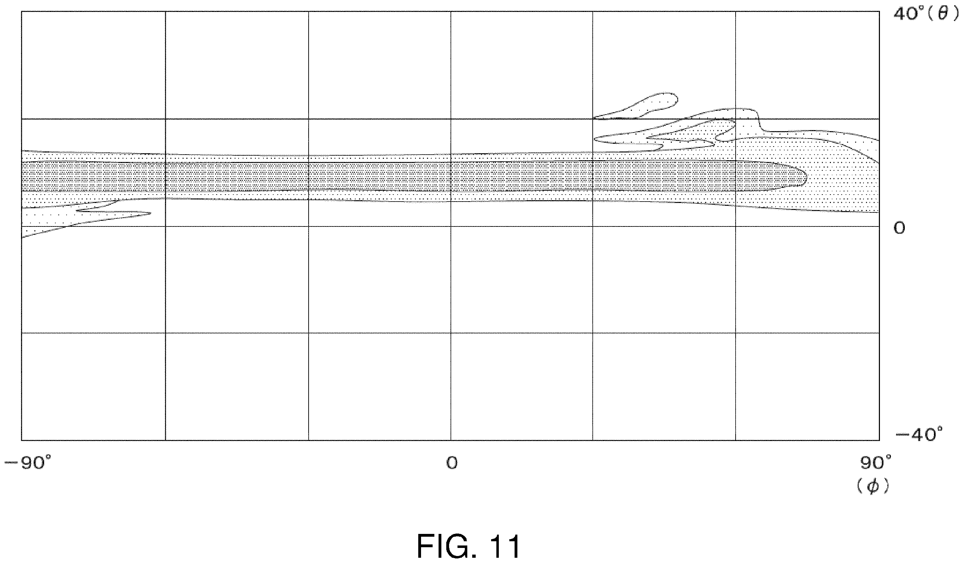

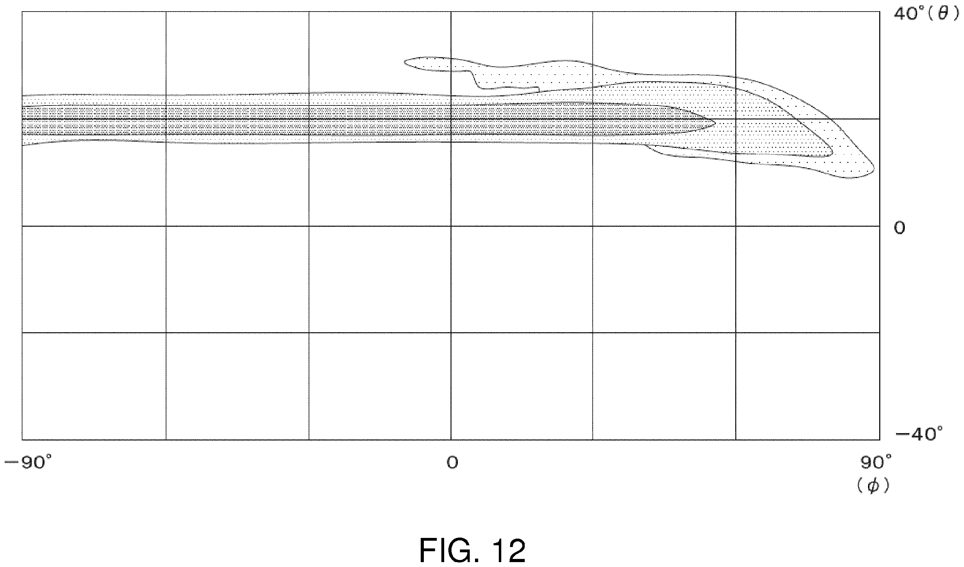

Further, after the phase control described here is executed for all the transmission elements A, the high-intensity transmission wave may be transmitted to each azimuth angle ϕ when the tilt angle is +θ₁. Fig. 11 is a simulation result of an intensity distribution of the transmission waves when the phase control is executed so that the tilt angle of each transmission wave becomes +10°. Further, Fig. 12 is a simulation result of an intensity distribution of the transmission waves when the phase control is executed so that the tilt angle of each transmission wave becomes +20°. As illustrated in Figs. 11 and 12, according to the sonar 1, it is confirmed in a comparatively wide range of the azimuth angle that a sharp transmission wave may be transmitted to the tile angle of +10° and +20°. Note that according to Figs. 11 and 12, although the intensity of the transmission wave is weak in a part of the azimuth angular range, in a range of at least ϕ<50°, a sufficient intensity is obtained, which may be considered to be a no-problematic level for practical use.

### (C) When the tilt angle θ is -θ₁

In a case of transmitting the transmission wave in the direction in which the tilt angle θ is -θ₁, the transmission controller 15 may control the phases of the transmission signals generated corresponding to the transmission elements A so that the single-element transmission waves transmitted from the transmission elements A have a phase difference described next. As a result, a fan beam of which the tilt angle is -θ₁ may be transmitted to each azimuth angle ϕ with high intensity.

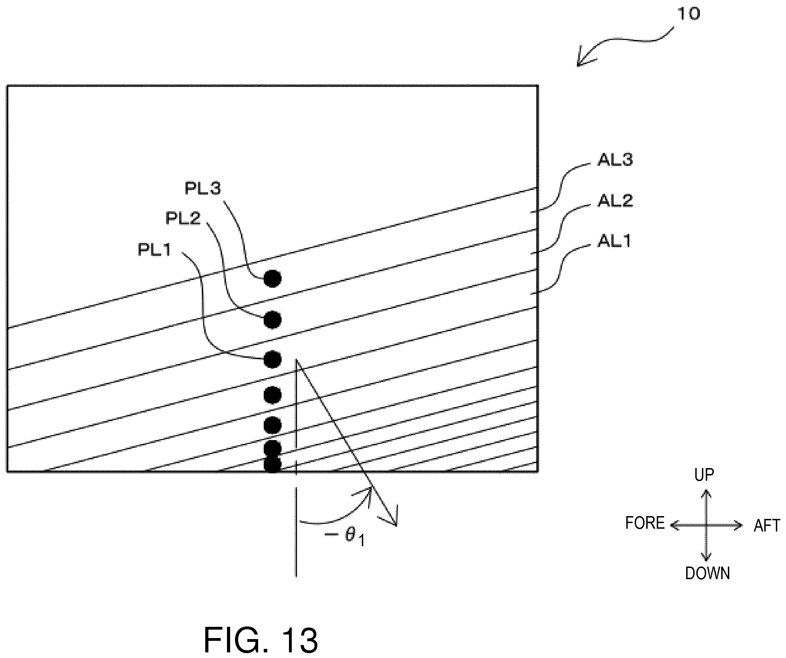

This control is described with reference to Fig. 13 which is a schematic left view of the transmission transducer 10 attached to the ship S. For example, considering the left elements AL1 to AL3, in order to have the tilt angle of the transmission wave at -θ₁, the single-element transmission waves of the left elements AL1 to AL3 may be shifted in phase so as to substantially eliminate the phase difference caused by an optical path difference of the single-element transmission waves from the left elements AL1 to AL3 in the -θ₁ direction. Therefore, the high-intensity transmission wave may be transmitted to the tilt angle of -θ₁. The sound field region formed by the left elements AL1 to AL3 described here may be the region near a point P7 in Fig. 8.

Also for the center elements AC1 to AC3 and the right elements AR1 to AR3, by performing similar phase shifting, the high-intensity transmission wave may be transmitted to the tilt angle of -θ₁ from the elements AC1 to AC3 and AR1 to AR3. The sound field region formed by the center elements AC1 to AC3 described here may be the region near a point P8 in Fig. 8. Further the sound field region formed by the right elements AR1 to AR3 described here may be the region near a point P9 in Fig. 8.

Further, after the phase control described here is executed for all the transmission elements A, the high-intensity transmission wave may be transmitted to each azimuth angle ϕ when the tilt angle is -θ₁.

### [Movement Correction]

Even when the transmission direction of each transmission wave from the transmission transducer deviates from the given direction due to the movement of the ship S, the transmission controller 15 may suitably perform the phase shifting on each transmission signal to bring the transmission direction of the transmission wave back to the given direction. Thus by the transmission controller 15 correcting the transmission direction of the transmission wave which is to be transmitted to a different direction from the given direction due to the movement of the ship S as described above, the transmission wave may continuously be transmitted in the given direction.

### [Roll Correction]

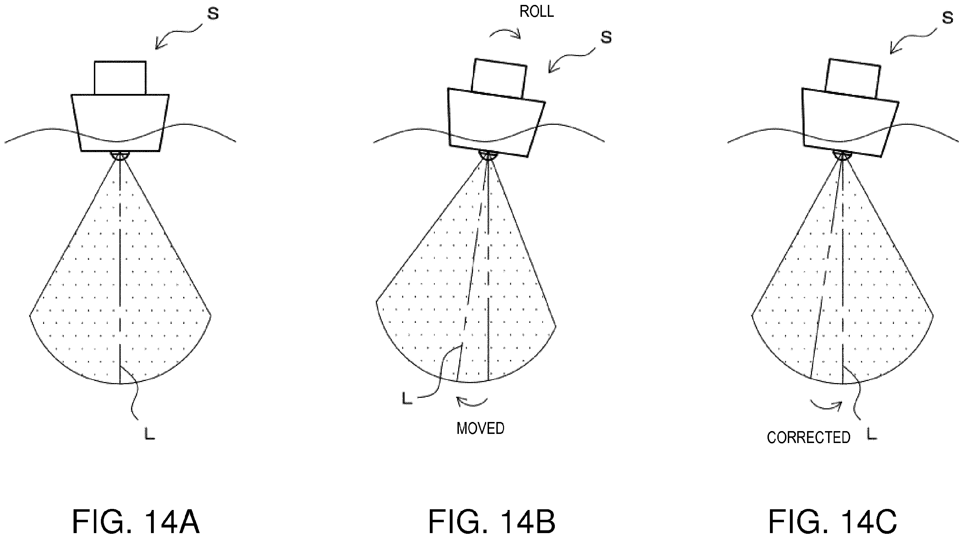

Figs. 14A to 14C are schematic rear views of the ship S when traveling, and illustrating a roll correction, in which Fig. 14A is a view illustrating the ship S before moving in the roll direction and the transmission beam, Fig. 14B is a view illustrating the ship S moving in the roll direction and the transmission beam, and Fig. 14C is a view illustrating the transmission beam after the roll correction, together with the ship S. In Fig. 14 and Figs. 15 and 16 which are described in detail as follows, the range for which the transmission beam is formed is indicated by dot hatching.

In this embodiment, the roll correction may be performed as follows. For example, when the ship S moves in the roll direction and a central axis L of the transmission beam deviates from the vertically downward direction (see Fig. 14B), the transmission controller 15 may control the amplitude of each transmission signal so as to bring the central axis L of the transmission beam back to the original position (i.e., to the vertically downward direction). More specifically, for example, the transmission controller 15 may execute the amplitude control with weight so that the amplitude for the transmission element A facing vertically downward due to the movement in the roll direction becomes larger, and the amplitude for the other transmission elements A become smaller as the position of the transmission element A is farther away from the transmission element A facing vertically downward due to the movement in the roll direction. Thus, the movement correction in the roll direction may be performed and side lobes in the beam waveform may be reduced.

### [Pitch Correction]

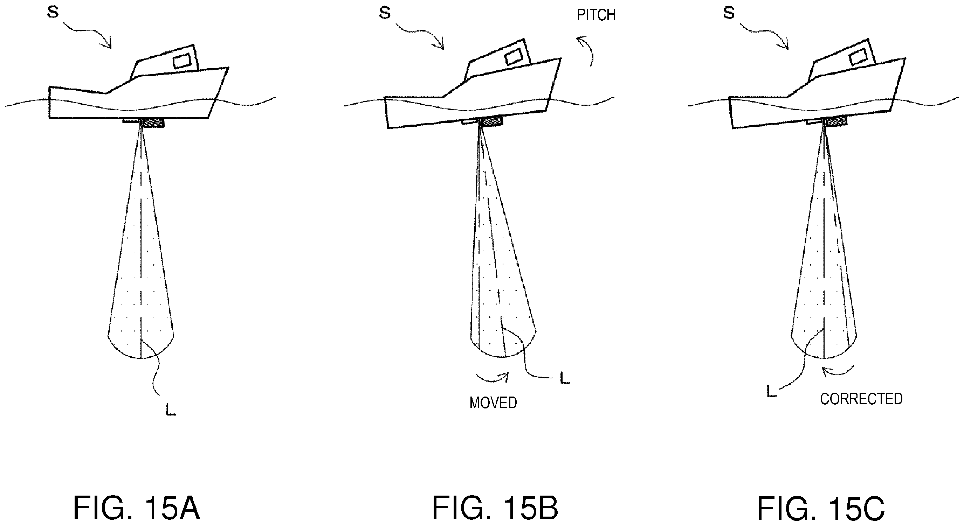

Figs. 15A to 15C are schematic side views of the ship S when traveling, and illustrating a pitch correction, in which Fig. 15A is a view illustrating the ship S before moving in the pitch direction and the transmission beam, Fig. 15B is a view illustrating the ship S moving in the pitch direction and the transmission beam, and Fig. 15C is a view illustrating the transmission beam after the pitch correction, together with the ship S.

In this embodiment, the pitch correction may be performed as follows. For example, when the ship S moves in the pitch direction and the central axis L of the transmission beam deviates from the vertically downward direction (see Fig. 15B), the transmission controller 15 may control the phase of each transmission signal so as to bring the central axis L of the transmission beam back to the original position (i.e., to the vertically downward direction).

More specifically, the movement correction in the pitch direction may be performed on the same principle as the control in the tilt direction described above. That is, for example, while the transmission wave is transmitted in the direction in which the pitch angle is 0°, if the bow of the ship S inclines upward by 10°, the pitch correction may be performed by controlling the phase of each single-element transmission wave so that the transmission wave is transmitted to the tilt angle of -10° relative to the ship S.

### [Yaw Correction]

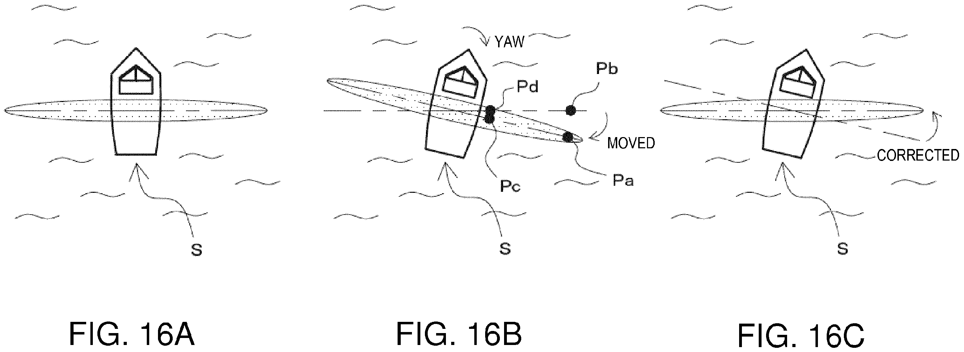

Figs. 16A to 16C are schematic top views of the ship S when traveling, and illustrating a yaw correction, in which Fig. 16A is a view illustrating the ship S before moving in the yaw direction and the transmission beam, Fig. 16B is a view illustrating the ship S moving in the yaw direction and the transmission beam, and Fig. 16C is a view illustrating the transmission beam after the yaw correction, together with the ship S.

In this embodiment, the yaw correction may be performed as follows. For example, when the ship S moves in the yaw direction and the transmission beam becomes oblique to the original direction when seen from the upper side (see Fig. 16B), the transmission controller 15 may control the phase of each transmission signal so as to eliminate the inclination (see Fig. 16C).

The movement correction in the yaw direction may be performed as follows. For example, with reference to Fig. 16B, due to the movement in the yaw direction, a transmission point Pa of the single-element transmission wave which is transmitted to a direction in which the azimuth angle ϕ is comparatively large, may greatly deviate from a transmission point Pb to which the single-element transmission wave was supposed to be transmitted. Therefore, the transmission controller 15 may correct the large deviation amount by controlling the phase of the transmission signal so that the single-element transmission wave is transmitted to the point Pb.

On the other hand, with reference to Fig. 16B, due to the movement in the yaw direction, a transmission point Pc of the single-element transmission wave which is transmitted to a direction in which the azimuth angle ϕ is comparatively small, may slightly deviate from a transmission point Pd to which the single-element transmission wave was supposed to be transmitted. Therefore, the transmission controller 15 may correct the small deviation amount by controlling the phase of the transmission signal so that the single-element transmission wave is transmitted to the point Pd. Thus, the transmission controller 15 may control the phase of each transmission signal so that the tilt angle θ changes depending on the azimuth angle ϕ, instead of the tilt angle θ being constant regardless of the azimuth angle ϕ.

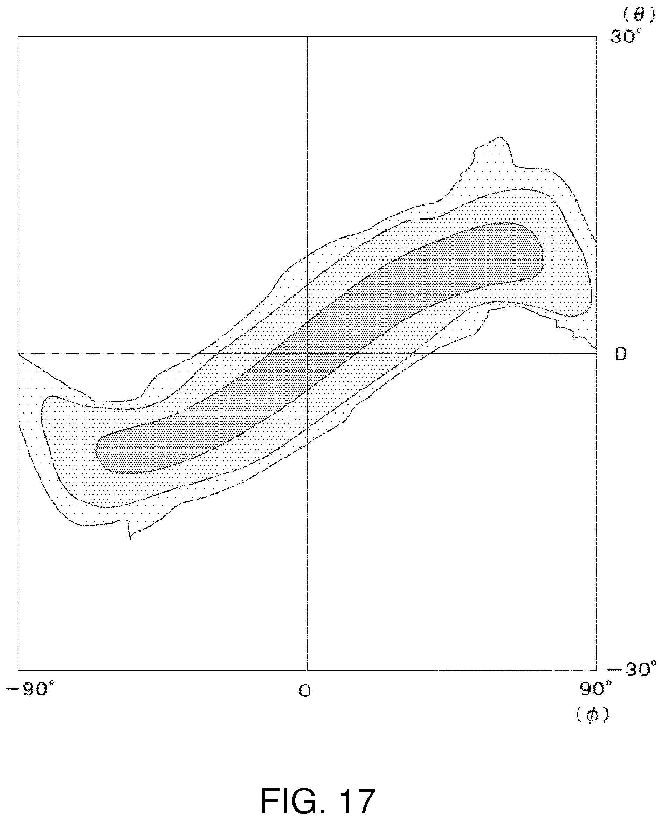

Fig. 17 is a simulation result of an intensity distribution of the transmission waves when the tilt angle of the transmission wave is changed depending on the azimuth angle. As illustrated in Fig. 17, according to the sonar 1, it is confirmed that a transmission wave which is comparatively sharp in the tilt angle may be transmitted even if the tilt angle of the transmission wave is changed depending on the azimuth angle.

The reception signal processor 20 may perform beam forming (e.g., summing phase-shifted signals) on the reception signals obtained from the respective reception elements B, to generate a large number of reception beams having directivity at respective azimuth angles. The reception signal processor 20 may perform depth sounding at each azimuth angle based on the reception signal obtained from the reception beam formed at the azimuth angle. In the sonar 1, by performing the depth sounding as described above while the ship S travels, depth sounding may be performed for each point in a two-dimensional region below the ship.

The image generator 21 may generate a topographic map of seabed based on depth sounding data of each point in the two-dimensional area below the ship where the depth sounding is performed as described above. The topographic map of the seabed may be a bird's-eye view of the seabed, or a top view illustrating the seabed, in which the depth corresponds to the color tone (e.g., a view illustrating a shallow position in red, a deep position in blue, and an intermediate position in orange, yellow, green etc.).

The display unit 8 may display a seabed topographic map generated by the image generator 21.

### [Effect]

As described above, in the sonar 1 of this embodiment, the transmission transducer 10 has the following configuration. The transmission transducer 10 has the plurality of transmission elements A individually extending obliquely to the fore-aft direction of the ship S and arranged in the port-starboard direction of the ship S. By structuring the transmission transducer 10 as described above, even if the ship S moves in one of the roll direction, the pitch direction, and the yaw direction, the transmission direction of the transmission wave may be brought back to the original direction. Thus, according to the sonar 1, the transmission direction of the transmission wave may be stabilized regardless of the movement direction of the ship. Further in the sonar 1, the transmission elements A may be arranged one-dimensionally. Thus, according to the sonar 1, since there is no need to arrange the transmission elements two-dimensionally, the transmission direction of the transmitting wave may be stabilized by using a small number of the transmission elements A.

Therefore, according to the sonar 1, the underwater detection apparatus which stabilizes the transmission direction of the transmission wave may be provided at low cost.

Further, in the sonar 1, the transmission controller 15 may easily change the transmission direction of each transmission wave by controlling the phase of the transmission signal generated corresponding to each transmission element.

Further, in the sonar 1, the phase and the amplitude of the transmission signal may suitably be controlled based on the pitch angle, the roll angle, and the yaw angle of the ship S acquired by the attitude information acquirer 14. Thus, the transmission wave may stably be transmitted from the transmission transducer in the given direction regardless of the movement direction of the ship.

Further, according to the sonar 1, the tilt angle θ may be controlled depending on the azimuth angle ϕ of the transmission wave. Thus, even if the ship S moves in the yaw direction, the transmission wave from the transmission transducer may be corrected back to the original direction.

Further, in the sonar 1, the plurality of transmission elements A are disposed on a curved surface (e.g., along the outer circumferential surface of the cylindrical casing 12). Thus, the transmission wave may be transmitted in a wide range of azimuth angle.

Further, in the sonar 1, the plurality of transmission elements A are disposed on the curved surface including at least a part of the side of the cylinder and bulging downward with the transmission transducer 10 being fixed to the ship S (e.g., along the outer circumferential surface of the cylindrical casing 12). Thus, the single-element transmission wave may be transmitted to each azimuth angle.

Further, in the sonar 1, the plurality of reception elements B may be arranged in the port-starboard direction of the ship S. Thus, the reception beam crossing the transmission beam formed by the transmission transducer 10 may be formed, and as a result, a reception transducer suitable for a cross fan beam type sonar may be provided.

### [Modifications]

Although the embodiment of this disclosure is described above, this disclosure is not limited thereto, and various modifications are possible without departing from the scope of this disclosure.
(1) In the embodiment described above, the sonar 1 which corrects, when the ship S moves in one of the pitch, roll, and yaw directions, the transmission wave based on the movement of the ship S is described as an example; however, this disclosure is not limited to this. For example, in addition to the movement correction described above, the phase of each single-element transmission wave may be controlled so that the transmission direction of the transmission wave is oriented in the given direction when the ship travels while side slipping.

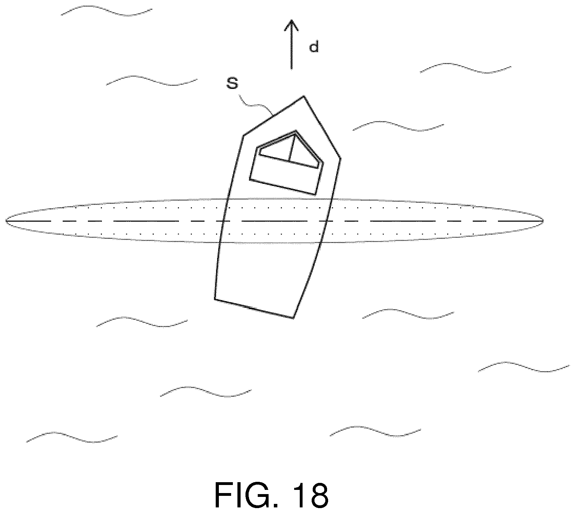

Fig. 18 is a schematic top view of the ship S traveling while side slipping. The phase control of the single-element transmission wave when the ship S is side slipping may be executed as follows. For example, the phase of each single-element transmission wave may be controlled so that the fan-shaped transmission wave (the dot hatching region in Fig. 18) is oriented perpendicular to a traveling direction d of the ship S, and not the fore-aft direction of the ship S. The description of the specific phase control is omitted since it may be the same as the control executed when the movement in the yaw direction occurs in the above embodiment. Further, when the ship S travels while side slipping, movements in the roll direction, the pitch direction, and the yaw direction may occur in combination. Regarding corrections for these movements, the description thereof is omitted since they may be similar to the above embodiment.

As described above, according to this modification, the transmission direction of the transmission wave may be stabilized even when the ship S is side slipping.

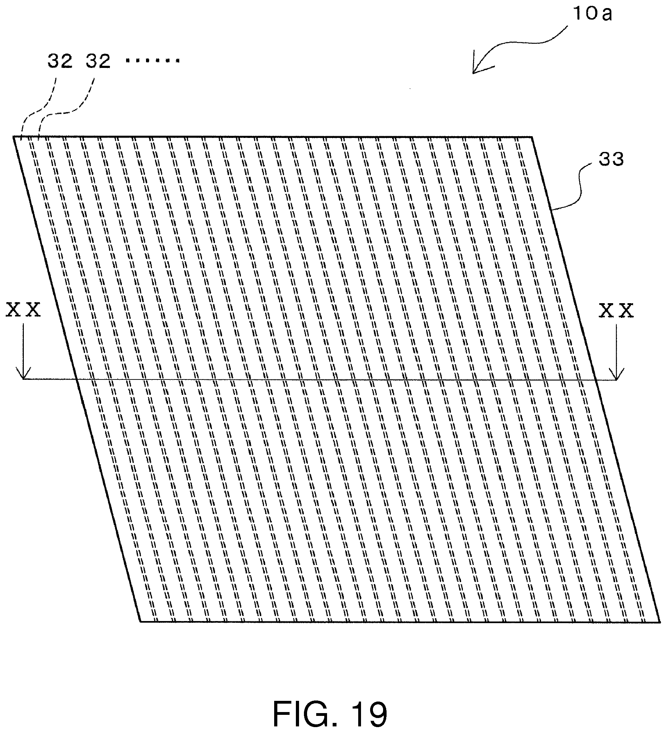

(2) Fig. 19 is a plan view of a transmission transducer 10a provided to the sonar according to another modification which does, however, not fall under the scope of the claimed inventions.

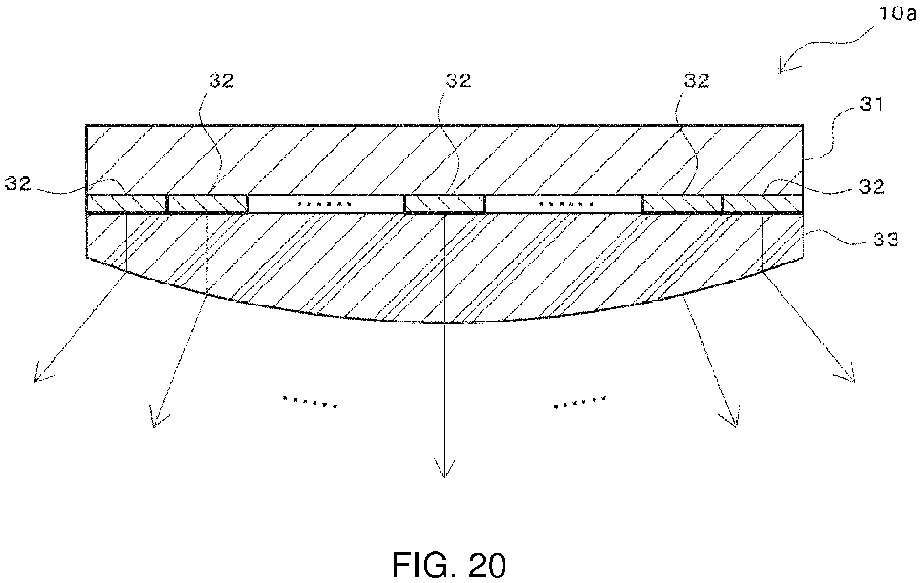

Fig. 20 is a cross-sectional view taken along the line XX-XX of Fig. 19, in which the transmission directions of the single-element transmission waves in a state where the transmission transducer 10a illustrated in Fig. 19 is exposed to the sea is indicated by arrows.

In the transmission transducer 10 of the above embodiment, the example in which the transmission elements A may be fixed to the outer circumferential surface 13 of the cylindrical casing 12 by being in close contact therewith is described; however, in the transmission transducer 10a of this modification, the transmission elements A may be arranged along a plane surface and an acoustic lens 33 may be attached to the transmitting surface 11. Hereinafter, different points of this modification from the above embodiment are described and the description of other points is omitted.

The transmission transducer 10a of this modification may be formed by combining a plate-shaped casing 31 having a given thickness, a plurality of transmission elements 32 fixed to the plate-shaped casing 31, and the acoustic lens 33.

In the transmission transducer 10a, the plurality of transmission elements 32 may be fixed to a side surface of the plate-shaped casing 31. For example, the plurality of transmission elements 32 may be arranged at intervals in the port-starboard direction of the ship S and fixed to the plate-shaped casing 31 so that the longitudinal direction of each transmission element 32 is oblique to the fore-aft direction of the ship S in the state where the transmission transducer 10a is fixed to the ship S. The transmission transducer 10a may be disposed so that the surface on which the transmission elements 32 are fixed faces downward and is substantially parallel to the horizontal plane in the state where it is fixed to the ship S.

The acoustic lens 33 may spread in the azimuth direction the transmission waves transmitted from the transmission elements 32. The acoustic lens 33 may be made of a material having a refractive index different from that of seawater. Note that, although Fig. 20 illustrates an example in which the acoustic lens 33 is comprised of a plano-convex lens, without limiting to this, another shape (e.g., plano-concave shape) may be adopted depending on the relationship between the refractive index of the material constituting the acoustic lens 33 and the refractive index of seawater.

In the transmission transducer 10 of the above embodiment, each transmission element A may be attached along the outer circumferential surface of the cylindrical casing 12 so that each single-element transmission wave is transmitted to the corresponding azimuth angle. On the other hand, in the transmission transducer 10a of this modification, with reference to Fig. 20, the transmission directions of the single-element transmission waves may be bent by the acoustic lens 33, and thus the single-element transmission waves may be transmitted to the corresponding azimuth angles. In other words, for the purpose of the single-element transmission waves spreading in the azimuth direction, comparing the transmission transducer 10a of this modification and the transmission transducer 10 of the above embodiment, the configuration of the transmission transducers is different but for example, the method of controlling the phase of the single-element transmission waves, etc. is the same.

Therefore, also in the sonar of this modification, similar to the sonar 1 of the above embodiment, the underwater detection apparatus which stabilizes the transmission direction of the transmission wave may be provided at low cost.

Further, according to the sonar of this modification, the transmission transducer 10a may include the acoustic lens 33. Thus, the single-element transmission waves from the transmission elements 32 of the transmission transducer 10a may be transmitted to spread in the azimuth direction. As a result, a fan-shaped transmission beam spreading in the azimuth angle may be formed.

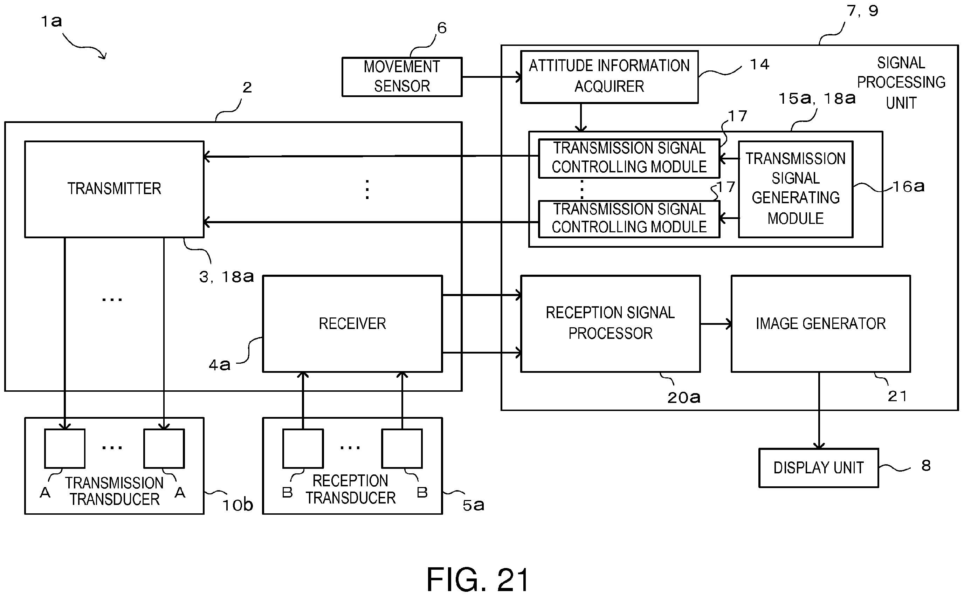

(3) Fig. 21 is a block diagram illustrating a configuration of a sonar 1a of another modification. In the above embodiment, the example in which the frequency bands of the transmission waves transmitted from the transmission transducer 10 may be the same is described; however, this disclosure is not limited to this. For example, the sonar 1a may be configured so that the transmission elements A transmit at different timings transmission waves having different frequencies.

In a transmission controller 15a of a transmission circuit 18a of this modification, a transmission signal generating module 16a may repeatedly generate a first transmission signal and a second transmission signal having different frequencies from each other, and the transmission signal controlling module 17 may perform on the transmission signals phase shifting similar to the case of the transmission signal controlling module of the above embodiment. The first transmission signal and the second transmission signal may alternately be formed.

A transmission transducer 10b may alternately transmit the first transmission wave corresponding to the first transmission signal and the second transmission wave corresponding to the second transmission signal. The time interval since transmission of one of the first and second transmission waves until next transmission of the other transmission wave by the transmission transducer 10b may be shorter than the transmission interval of the transmission waves in the above embodiment.

A reception transducer 5a may alternately receive a first reception wave as a reflection wave of the first transmission wave and a second reception wave as a reflection wave of the second transmission wave. The first reception wave and the second reception wave received by the reception transducer 5a may be converted into the first reception signal and the second reception signal by a receiver 4a (which may also be referred to as a reception circuit 4a), respectively, and then outputted to a reception signal processor 20a. The reception signal processor 20a may process each of the first reception signal and the second reception signal separately, and perform similar depth sounding to that in the above embodiment based on each reception signal. Also in this modification, similar movement corrections to those in the above embodiment may be performed.

As described above, according to this modification, since ultrasonic waves may be transmitted and received at a short time interval compared with the sonar 1 of the above embodiment, the number of sounding points per unit area may be increased. That is, according to this modification, a more accurate seabed topographic map may be obtained.

Note that in this modification, the example in which two kinds of transmission waves (the first transmission wave and the second transmission wave) may be transmitted from the transmission transducer 10b is described; however, without limiting to this, the sonar may be configured so that the transmission transducer 10b transmits three or more kinds of transmission waves having different frequencies (first transmission wave, second transmission wave, third transmission wave, ...). Thus, a more accurate seabed topographic map may be obtained.

This disclosure may broadly be applied to underwater detection apparatuses, which are particularly of a cross fan beam type.

## Claims

1. An underwater detection apparatus (1, 1a), comprising:
a transmission transducer (10, 10a, 10b) comprising a plurality of transmission elements (A, 32) fixed to a vessel (S), each transmission element (A, 32) extending in an oblique direction relative to a fore-aft direction of the vessel (S), the plurality of transmission elements (A, 32) being arranged on a curved surface;
a reception transducer (5, 5a) comprising a plurality of reception elements (B);
an attitude information receiver (14) configured to acquire an attitude information of the vessel (S);
a transmission circuit (18, 18a) configured to drive the plurality of transmission elements (A, 32) based on the attitude information to make the transmission transducer (10, 10a, 10b) transmit a transmission wave in a given direction relative to the water surface; and
a reception circuit (4, 4a) configured to obtain a reception signal from each of the plurality of reception elements (B) based on a reflection wave of the transmission wave, the reflection wave being received by the reception transducer (5, 5a),
**characterized in that**:
the curved surface is bulging downward and comprises at least a part of a side of a cylinder; and
the central axis of the cylinder is configured to extend in the fore-aft direction of the vessel (S).

2. The underwater detection apparatus of claim 1, wherein
the transmission circuit (18, 18a) makes the transmission transducer (10, 10a, 10b) transmit the transmission wave in the given direction by driving each transmission element (A, 32) with a transmission signal and by controlling at least one of a phase and an amplitude of each transmission signal.

3. The underwater detection apparatus of claim 2, wherein
the attitude information comprises a roll information of the vessel (S); and
the transmission circuit (18, 18a) controls the amplitude of each transmission signal based on the roll information.

4. The underwater detection apparatus of claim 2 or claim 3, wherein
the attitude information comprises a pitch information of the vessel (S); and
the transmission circuit (18, 18a) controls the phase of each transmission signal based on the pitch information.

5. The underwater detection apparatus of claims 2 to 4, wherein
the attitude information comprises a yaw information of the vessel (S); and
the transmission circuit (18, 18a) controls the phase of each transmission signal based on the yaw information.

6. The underwater detection apparatus of claim 5, wherein
when the vessel (S) is side slipping, the transmission circuit (18, 18a) controls the phase of each transmission signal to control a tilt angle of the transmission wave.

7. The underwater detection apparatus of claim 6, wherein
the transmission circuit (18, 18a) controls the tilt angle depending on a transmission direction of the transmission wave.

8. The underwater detection apparatus of claims 1 to 7, wherein
the transmission transducer (10, 10a, 10b) further comprises an acoustic lens covering a transmitting surface of the plurality of transmission elements (A, 32).

9. The underwater detection apparatus of any of the preceding claims, wherein each transmission element (A, 32) has an elongated wave transmitting surface.

10. The underwater detection apparatus of any of the preceding claims, wherein
the plurality of transmission elements (A, 32) are arranged in a port-starboard direction of the vessel (S).

11. The underwater detection apparatus of any of the preceding claims, further comprising
an image generator (21) configured to generate an image based on the reception signal.

## Patentansprüche

1. Unterwasser-Detektionsvorrichtung (1, 1a), die Folgendes umfasst:
einen Übertragungswandler (10, 10a, 10b), der mehrere an einem Schiff (S) befestigte Übertragungselemente (A, 32) umfasst, wobei sich jedes Übertragungselement (A, 32) in einer schrägen Richtung relativ zu einer Vorwärts-Rückwärts-Richtung des Schiffs (S) erstreckt, wobei die mehreren Übertragungselemente (A, 32) auf einer gekrümmten Fläche angeordnet ist;
einen Empfangswandler (5, 5a), der mehrere Empfangselemente (B) umfasst;
einen Lageinformationsempfänger (14), der zum Gewinnen einer Lageinformation des Schiffs (S) konfiguriert ist;
eine Übertragungsschaltung (18, 18a), die zum Ansteuern der mehreren Übertragungselemente (A, 32) auf der Basis der Lageinformation konfiguriert ist, um den Übertragungswandler (10, 10a, 10b) zu veranlassen, eine Übertragungswelle in einer gegebenen Richtung relativ zur Wasseroberfläche zu übertragen; und
eine Empfangsschaltung (4, 4a), die zum Erhalten eines Empfangssignals von jedem der mehreren Empfangselemente (B) auf der Basis einer Reflexionswelle der Übertragungswelle konfiguriert ist, wobei die Reflexionswelle von dem Empfangswandler (5, 5a) empfangen wird,
**dadurch gekennzeichnet, dass**:
die gekrümmte Oberfläche nach unten gewölbt ist und mindestens einen Teil einer Seite eines Zylinders umfasst; und
die Mittelachse des Zylinders so konfiguriert ist, dass sie sich in der Vorwärts-Rückwärts-Richtung des Schiffs (S) erstreckt.

2. Unterwasser-Detektionsvorrichtung nach Anspruch 1, wobei
die Übertragungsschaltung (18, 18a) den Übertragungswandler (10, 10a, 10b) durch Ansteuern jedes Übertragungselements (A, 32) mit einem Übertragungssignal und Steuern einer Phase und/oder einer Amplitude jedes Übertragungssignals veranlasst, die Übertragungswelle in der gegebenen Richtung zu übertragen.

3. Unterwasser-Detektionsvorrichtung nach Anspruch 2, wobei
die Lageinformation eine Rollinformation des Schiffs (S) umfasst; und
die Übertragungsschaltung (18, 18a) die Amplitude jedes Übertragungssignals auf der Basis der Rollinformation steuert.

4. Unterwasser-Detektionsvorrichtung nach Anspruch 2 oder Anspruch 3, wobei
die Lageinformation eine Stampfinformation des Schiffs (S) umfasst; und
die Übertragungsschaltung (18, 18a) die Phase jedes Übertragungssignals auf der Basis der Stampfinformation steuert.

5. Unterwasser-Detektionsvorrichtung nach einem der Ansprüche 2 bis 4, wobei
die Lageinformation eine Gierinformation des Schiffs (S) umfasst; und
die Übertragungsschaltung (18, 18a) die Phase jedes Übertragungssignals auf der Basis der Gierinformation steuert.

6. Unterwasser-Detektionsvorrichtung nach Anspruch 5, wobei
die Übertragungsschaltung (18, 18a), wenn das Schiff (S) seitlich gleitet, die Phase jedes Übertragungssignals steuert, um einen Neigungswinkel der Übertragungswelle zu steuern.

7. Unterwasser-Detektionsvorrichtung nach Anspruch 6, wobei
die Übertragungsschaltung (18, 18a) den Neigungswinkel in Abhängigkeit von einer Übertragungsrichtung der Übertragungswelle steuert.

8. Unterwasser-Detektionsvorrichtung nach einem der Ansprüche 1 bis 7, wobei
der Übertragungswandler (10, 10a, 10b) ferner eine akustische Linse umfasst, die eine Übertragungsfläche der mehreren Übertragungselemente (A, 32) abdeckt.

9. Unterwasser-Detektionsvorrichtung nach einem der vorherigen Ansprüche, wobei jedes Übertragungselement (A, 32) eine längliche Wellenübertragungsfläche aufweist.

10. Unterwasser-Detektionsvorrichtung nach einem der vorherigen Ansprüche, wobei
die mehreren Übertragungselemente (A, 32) in einer Backbord-Steuerbord-Richtung des Schiffs (S) angeordnet sind.

11. Unterwasser-Detektionsvorrichtung nach einem der vorherigen Ansprüche, die ferner Folgendes umfasst:
einen zum Erzeugen eines Bildes auf der Basis des Empfangssignals konfigurierten Bildgenerator (21).

## Revendications

1. Appareil de détection sous-marine (1, 1a), comprenant :
un transducteur d'émission (10, 10a, 10b) comprenant une pluralité d'éléments d'émission (A, 32) fixés à un navire (S), chaque élément d'émission (A, 32) s'étendant dans une direction oblique par rapport à une direction avant-arrière du navire (S), la pluralité d'éléments d'émission (A, 32) étant disposés sur une surface incurvée ;
un transducteur de réception (5, 5a) comprenant une pluralité d'éléments de réception (B) ;
un récepteur d'informations d'attitude (14) configuré pour acquérir des informations d'attitude du navire (S) ;
un circuit d'émission (18, 18a) configuré pour piloter la pluralité d'éléments d'émission (A, 32) sur la base des informations d'attitude pour amener le transducteur d'émission (10, 10a, 10b) à émettre une onde d'émission dans une direction donnée par rapport à la surface de l'eau ; et
un circuit de réception (4, 4a) configuré pour obtenir un signal de réception en provenance de chaque élément de réception de la pluralité d'éléments de réception (B) sur la base d'une onde de réflexion de l'onde d'émission, l'onde de réflexion étant reçue par le transducteur de réception (5, 5a),
**caractérisé en ce que** :
la surface incurvée est bombée vers le bas et comprend au moins une partie d'un côté d'un cylindre ; et
l'axe central du cylindre est configuré pour s'étendre dans la direction avant-arrière du navire (S).

2. Appareil de détection sous-marine selon la revendication 1, dans lequel :
le circuit d'émission (18, 18a) amène le transducteur d'émission (10, 10a, 10b) à transmettre l'onde d'émission dans la direction donnée en pilotant chaque élément d'émission (A, 32) avec un signal d'émission et en commandant une phase et/ou une amplitude de chaque signal d'émission.

3. Appareil de détection sous-marine selon la revendication 2, dans lequel :
les informations d'attitude comprennent des informations de roulis du navire (S) ; et
le circuit d'émission (18, 18a) commande l'amplitude de chaque signal d'émission sur la base des informations de roulis.

4. Appareil de détection sous-marine selon la revendication 2 ou 3, dans lequel :
les informations d'attitude comprennent des informations de tangage du navire (S) ; et
le circuit d'émission (18, 18a) commande la phase de chaque signal d'émission sur la base des informations de tangage.

5. Appareil de détection sous-marine selon les revendications 2 à 4, dans lequel :
les informations d'attitude comprennent des informations de lacet du navire (S) ; et
le circuit d'émission (18, 18a) commande la phase de chaque signal d'émission sur la base des informations de lacet.

6. Appareil de détection sous-marine selon la revendication 5, dans lequel :
lorsque le navire (S) glisse latéralement, le circuit d'émission (18, 18a) commande la phase de chaque signal d'émission pour commander un angle d'inclinaison de l'onde d'émission.

7. Appareil de détection sous-marine selon la revendication 6, dans lequel :
le circuit d'émission (18, 18a) commande l'angle d'inclinaison en fonction d'une direction d'émission de l'onde d'émission.

8. Appareil de détection sous-marine selon les revendications 1 à 7, dans lequel :
le transducteur d'émission (10, 10a, 10b) comprend en outre une lentille acoustique couvrant une surface d'émission de la pluralité d'éléments d'émission (A, 32).

9. Appareil de détection sous-marine selon l'une quelconque des revendications précédentes, dans lequel chaque élément de transmission (A, 32) possède une surface allongée d'émission d'ondes.

10. Appareil de détection sous-marine selon l'une quelconque des revendications précédentes, dans lequel :
la pluralité d'éléments d'émission (A, 32) sont agencés dans une direction bâbord-tribord du navire (S).

11. Appareil de détection sous-marine selon l'une quelconque des revendications précédentes, comprenant en outre :
un générateur d'image (21) configuré pour générer une image sur la base du signal de réception.
